# EUROPÄISCHE PATENTSCHRIFT

(11) **EP 2 021 607 B1**
(45) Veröffentlichungstag und Bekanntmachung des Hinweises auf die Patenterteilung: **09.09.2009**
(21) Anmeldenummer: 07703967.5
(22) Anmeldetag: 18.01.2007
(51) Int. Cl.: F02D 41/14, F02D 41/18, F02D 41/40, F01N 11/00

(54) **VERFAHREN UND VORRICHTUNG ZUR DIAGNOSE DER WIRKSAMKEIT EINES ABGASKATALYSATORS**
METHOD AND DEVICE FOR THE DIAGNOSIS OF THE EFFECTIVENESS OF A CATALYTIC CONVERTER
PROCÉDÉ ET DISPOSITIF DE DIAGNOSTIC DE L'EFFICACITÉ D'UN CATALYSEUR DE GAZ D'ÉCHAPPEMENT

(30) Priorität: 05.05.2006 DE 102006021091
(43) Veröffentlichungstag der Anmeldung: 11.02.2009
(73) Patentinhaber: Continental Automotive GmbH, 30165 Hannover (DE)
(72) Erfinder: DIETL, Roland, 93049 Regensburg (DE); RABL, Hans-Peter, 93309 Kelheim (DE); RADECZKY, Janos, 93173 Wenzenbach (DE)
(86) Internationale Anmeldenummer: PCT/EP2007/050470
(87) Internationale Veröffentlichungsnummer: WO 2007/128593

(56) Entgegenhaltungen:
- EP-A- 1 496 225
- EP-A- 1 591 651
- DE-A1- 4 308 894
- DE-A1- 10 113 010
- DE-B3- 10 254 477

## Beschreibung

Die vorliegende Erfindung betrifft ein Verfahren und eine Vorrichtung zur Diagnose der Wirksamkeit eines Abgaskatalysators im Abgasstrang einer Brennkraftmaschine bei Verwendung einer sehr späten Nacheinspritzung bzw. Sekundäreinspritzung.

Es ist aus dem Stand der Technik bekannt, eine Sekundäreinspritzung so vorzusehen, dass der eingespritzte Brennstoff noch zündet und sich durch die Verbrennung in der Expansionsphase die Abgastemperatur erhöht. Hierdurch wird gemäß der Lehre der EP 0 621 400 B1 ein im Abgasstrang angeordneter Katalysator aus einem kalten Zustand heraus schneller auf eine Betriebstemperatur erwärmt.

Aus der DE 100 61 796 A1 wird durch gezielt eingesetzte Nacheinspritzung ein Ansprechverhalten eines nachgeschalteten Abgasturboladers dadurch verbessert, dass der nachträglich eingespritzte Brennstoff im Wesentlichen erst im Bereich des Katalysators umgesetzt wird und dort eine deutliche Erhöhung von Temperatur und Enthalpie des Abgases bewirkt. Hierdurch wird der Abgasturbolader schneller hochgefahren, was gerade beim Beschleunigen wichtig ist. Beim Beschleunigen, und da v.a. bei zuvor untertourigem Fahren, fehlt dem Turbolader abgasseitig zunächst die richtige Abgasmenge, um den für den Beschleunigungsvorgang gewünschten Ladedruck zu erzeugen. Dieses langsame Ansprechverhalten bezeichnet man umgangssprachlich auch als Turboloch. Durch Umsetzung der Lehre aus der DE 100 61 796 A1 wird dieses Turbolader-Loch gemindert.

Es sind weiterhin auch Verfahren bekannt, die durch zusätzliches Einspritzen von Kraftstoff in den späten Arbeitshub oder in den Ausschiebetakt einer Verbrennungskraftmaschine hinein dem im Abgasstrang angeordneten Katalysator im Wesentlichen unverbrannten Kraftstoff zuführen. Bei diesen Verfahren wird über eine Messung des Temperaturverlaufes die im Katalysator entstehende Exotherme ermittelt. Die Bestimmung der Exotherme wird wiederum als Maß für die Konvertierungsfähigkeit und damit die Wirkungsfähigkeit des Katalysators ausgewertet. Diese Verfahren arbeiten mit Luftüberschuss und können deshalb bei allen magerlauffähigen Motoren und insbesondere bei Benzindirekteinspritzer-Motoren und Dieselmotoren angewendet werden. Notwendig hierfür ist jedoch ein zusätzlicher Abgastemperatursensor.

Ein Verfahren zur Bestimmung einer Katalysatortemperatur auf Basis verschiedener Betriebsgrößen des Antriebssystems ist unter Verwendung eines physikalischen Modells aus der DE 102 54 477 B3 bekannt. In dieser Schrift wird jedoch auch darauf verwiesen, dass das Vorsehen eines konkreten Temperatursensors zur Messung der Katalysatortemperatur wesentlich genauer arbeitet.

Die vorstehend genannten Lehren zur Diagnose der Wirkungsfähigkeit von Katalysatoren tragen den prinzipiellen Nachteil in sich, das sie Ergebnisse erst mit großer Zeitverzögerung geben. Dies liegt u.a. an den gewählten prinzipiellen Ansätzen, die auf einer Bilanzierung der Zustände im Regelbetrieb und einem gesondert ausgelösten Testbetrieb bei geeigneten Betriebsparametern beruhen.

Ferner ist bei bekannten Verfahren nachteilig, dass sie in Anordnungen mit sehr motornah angeordneten Katalysatoren, beispielsweise im jeweiligen Zylinderkopf, in einem Abgaskrümmer oder unmittelbar vor einem Turbolader, den zusätzlichen apparativen und/oder Verfahrensaufwand vervielfachen. Dies ist insbesondere bei modernen Ansätzen der Motorkonstruktion der Fall, bei denen in jedem Auslasskanal ein separater Katalysator angeordnet ist, so genannte Zylinderkopf-Katalysatoren.

Es ist daher die Aufgabe der vorliegenden Erfindung unter Einsparung der Kosten für zusätzliche Abgastemperatur-Sensoren und nur minimal erhöhtem Kraftstoffverbrauch ein empfindliches und dennoch robustes Diagnoseverfahren zu schaffen, das bei geringer zeitlicher Verzögerung zuverlässige Ergebnisse liefert. Weiterhin besteht die Aufgabe zur Schaffung einer entsprechenden Vorrichtung, die bei geringem Aufwand auch für einen Einsatz in verschiedenen Konzepten für Verbrennungskraftmaschinen einsetzbar ist.

Diese Aufgabe wird durch die Merkmale der jeweiligen unabhängigen Ansprüche gelöst. Vorteilhafte Weiterbildungen sind Gegenstand der Unteransprüche.

Eine erfindungsgemäße Lösung beruht auf der Ausnutzung des Effektes, dass Kraftstoff, der in einem späten Arbeitshub oder in einem Ausschiebetakt erst in eine Verbrennungskraftmaschine eingespritzt wurde und damit nicht im Zylinder verbrannt wird, erst in einem nachfolgenden Abgasstrang konvertiert bzw. umgesetzt wird. Insbesondere findet diese Konvertierung des Kraftstoffs im Wesentlichen erst am Katalysator statt. Die Konvertierung des Kraftstoffs ist eine exotherme Reaktion. Das bedeutet, dass durch die ablaufende Reaktion Wärme frei gesetzt wird, die zu einer Erhöhung der Enthalpie des Abgases führt. Bei Verwendung eines derartigen Verfahrens in einem Abgasstrang, bei dem ein Abgasturbolader stromab des Katalysators verwendet wird, führt die Erhöhung der Enthalpie des Abgasstromes zu einer höheren Verdichterleistung. Diese im Zuge einer Testeinspritzung von Kraftstoff in einem späten Arbeitshub oder im Ausschiebetakt hervorgerufene erhöhte Verdichterleistung hat einen höheren Ladedruck bzw. eine deutliche Zunahme des Luftmassenstroms an der Verbrennungskraftmaschine selber zur direkten Folge. Diese deutliche Veränderung wird durch eine Überwachung des Ladedrucks und des angesaugten Luftmassenstromes an der Verbrennungskraftmaschine detektiert.

Durch Einspritzen einer definierten zusätzlichen Testmenge an Kraftstoff, der im Wesentlichen nicht an der Verbrennung im Zylinder teilnimmt, ist stromauf des Katalysators der Gehalt an unverbrannten Bestandteilen im Abgasstrom bekannt. Entsprechend dem Wirkungsgrad des Katalysators wird diese Kraftstoffmenge abgebaut, wobei dieser Abbau zu einer Erhöhung der Abgasenthalpie führt. Die erhöhte Abgasenthalpie führt wiederum zu einer erhöhten Verdichterleistung, die ihrerseits durch eine Veränderung des Ladedruckes und des Luftmassenstromes detektiert wird. Damit besteht ein direkter Zusammenhang zwischen dem Wirkungsgrad des Katalysators und der erhöhten Verdichterleistung, so dass aus einer leicht messbaren Änderung der Ansaug-Luftmenge der Verbrennungskraftmaschine die Wirksamkeit des Katalysators bestimmbar ist.

Nach bekannten Temperatur-Messverfahren treten große zeitliche Verzögerungen von bis zu 30 Sekunden bis zu einer Detektion einer Exothermen bei geringer Robustheit und unzufriedenstellender Empfindlichkeit auf. Im Gegensatz zu den bekannten Messverfahren wird jedoch nach einem erfindungsgemäßen Verfahren bereits unter Verwendung sehr geringer Testmengen von Kraftstoff und innerhalb weniger Motorumdrehungen bzw. Zylinderhübe bereits eine ausreichend genau messbare Systemreaktion zur Verfügung gestellt. Damit arbeiten ein erfindungsgemäßes Verfahren und eine entsprechend aufgebaute Vorrichtung auch wesentlich schneller, robuster, empfindlicher und kraftstoffsparender, als dies bei bekannten Verfahren und Vorrichtungen der Fall ist.

In einem bevorzugten Ausführungsbeispiel der Erfindung sieht der Ablauf eines erfindungsgemäßen Verfahrens folgende Teilschritte vor: In einem Vorbereitungsschritt werden nach einem Erkennen der Notwendigkeit einer Katalysatordiagnose geeignete Betriebsbedingungen abgewartet. Sobald geeignete Betriebsbedingungen erreicht sind, werden folgende Schritte eingeleitet:
- Einstellung und/oder Detektion der erforderlichen Abgasrückführrate AGR oder Abschalten der Abgasrückführung
- Einstellung und/oder Detektion einer erforderlichen Drosselklappenstellung
- Ermittlung des Saugrohr-/Ladedruckes, des angesaugten Luftmassenstromes
- Aktivierung der Nacheinspritzung gekennzeichnet durch definierte Einspritzmenge und Zeitpunkt
- Ermittlung des Saugrohr-/Ladedruckes oder des angesaugten Luftmassenstromes
- Ermittlung des Anstiegs des Saugrohr-/Ladedruckes oder des angesaugten Luftmassenstromes
- Ermittlung der diesem Anstieg entsprechenden Abgasenthalpie
- Ermittlung des Katalysatorwirkungsgrades aus der zugeführten Nacheinspritzmenge und der am Katalysator konvertierten Einspritzmenge unter Berücksichtigung der AGR-Rate
- Mit der Kenntnis des Wirkungsgrades und eventuell des Betriebspunktes (gekennzeichnet beispielsweise durch Temperatur und Abgasmassenstrom) erfolgt eine Beurteilung des Katalysators bzgl. ausreichender Konvertierungsfähigkeit.

In einer alternativen Ausführungsform der Erfindung sind in jedem Auslasskanal Katalysatoren angeordnet, so genannte Zylinderkopf-Katalysatoren. So kann nach einem erfindungsgemäßen Verfahren bei geringem Aufwand jeder einzelne dieser Katalysatoren bezüglich seiner Wirkungsfähigkeit hin untersucht werden. Es existieren hierzu zwei prinzipielle Möglichkeiten:
1. Eine Einspritzung einer definierten Testmenge von Kraftstoff erfolgt nicht auf jedem Zylinder, sondern jeweils nur auf einem Zylinder. Die Katalysatordiagnose erfolgt dann nur für diesen einen Katalysator, der diesem betreffenden Zylinder zugeordnet ist.
2. Die Einspritzung einer definierten Testmenge erfolgt auf mehreren bis hin zu allen Zylindern. Unter Berücksichtigung der Laufzeit der einzelnen Teilabgasströme, die das rezirkulierte Abgas benötigt, kann dann im Zuge einer rückblickenden Auswertung ermittelt werden, in welchem Zylinder das Abgas welchen Katalysators nachverbrannt wird. Damit können innerhalb weniger Kurbelwellenumdrehungen alle Katalysatoren auch eines derart komplex aufgebauten Verbrennungskraftmotors diagnostiziert werden.

In einer weiteren alternativen Ausführungsform eines erfindungsgemäßen Verfahrens ist die Kenntnis einer jeweiligen Light-Off-Temperatur eines eingesetzten Katalysators das Ziel. Die so genannte Light-Off-Temperatur gibt definitionsgemäß an, bei welcher Temperatur der Katalysator 50 % der im Abgasstrom enthaltenen Kraftstoff-Restbestände umsetzt. Diese Marke ist ein Maß für das so genannte Anspringen des Katalysators. Dabei gibt die Light-Off-Temperatur bzw. der Light-Off-Zeitpunkt Auskunft über einen Schädigungsgrad eines jeweiligen Katalysators. Ferner ist das Erkennen des Light-Off-Zeitpunktes wichtig für die Einleitung aktiver Katalysator-Heizmaßnahmen, wie sie unter Anderem auch durch definiert durchgeführte Sekundäreinspritzungen von unverbranntem Kraftstoff in den Abgastrakt hinein vorgenommen werden können.

Nach einem erfindungsgemäßen Verfahren und einer dementsprechend ausgebildeten Vorrichtung kann damit eine Diagnose eines betreffenden Katalysators durchgeführt werden, ohne dass dabei zusätzliche Sensorik erforderlich wäre, beispielsweise in Form von Abgaszusammensetzungs- und/oder Temperatursensorik. Diese Einsparungen erschließen einerseits deutliche Kostenvorteile, andererseits erhöhen sie zusätzlich auch die Robustheit eines Verfahrens und einer entsprechenden Vorrichtung. Ferner ist eine erfindungsgemäße Diagnose sehr exakt, da die Ermittlung eines Katalysatorwirkungsgrades auf Basis einer sehr genauen Messmethode in Form beispielsweise einer Druck- oder Durchflussmessung erfolgt. Weiterhin ist eine erfindungsgemäße Diagnose auch sehr schnell durchführbar. Einige wenige Kolbenhübe sind dazu prinzipiell ausreichend. Der Vorteil dieser Eigenschaft liegt wiederum in einer deutlichen Erhöhung der Robustheit und in einem nur minimalen Kraftstoffmehraufwand, der bei Durchführung beispielsweise in einem Testzyklus auf dem Rollenprüfstand nach dem Europäischen Fahrzyklus der Motor Vehicle Emissions Group, kurz MVEG, oder entsprechenden Simulationen nach Standards aus den USA oder Japan vernachlässigbar gering ist. Schließlich kann auch ein so genanntes Anspringen des Katalysators detektiert werden, was unter Anderem zum Einleiten aktiver Katalysator-Heizmaßnahmen, aber auch zur Abschätzung einer Katalysatorschädigung genutzt werden kann.

Nachfolgend werden weitere vorteilhafte Eigenschaften eines erfindungsgemäßen Verfahrens und einer entsprechenden Vorrichtung unter Bezugnahme eines Ausführungsbeispiels anhand der Zeichnung näher erläutert. Es zeigen:
- Figur 1:: ein Blockdiagramm eines Antriebssystems für ein Kraftfahrzeug mit einer Verbrennungskraftmaschine, einem Abgaskatalysator und einem nachgeschalteten Turbo-Abgasgenerator und
- Figur 2:: ein Flussdiagramm eines Prüfverfahrens für den Abgaskatalysator gemäß Fig. 1.

Über die Abbildungen hinweg werden gleiche Bestandteile und Verfahrensschritte einheitlich mit gleichen Bezugszeichen versehen.

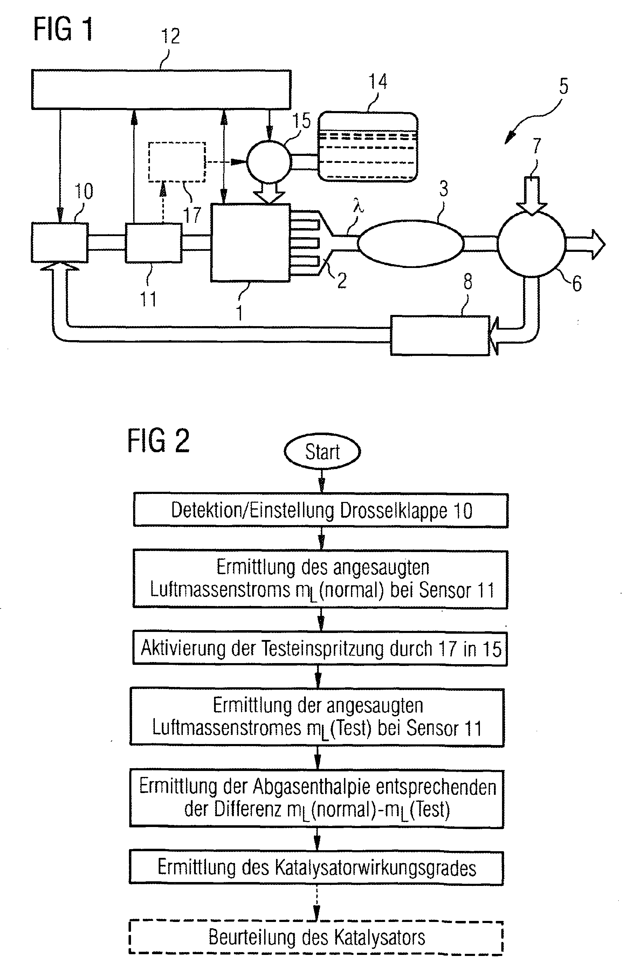

Die Abbildung von Fig. 1 zeigt ein vereinfachtes Blockdiagramm eines Antriebssystems für ein Kraftfahrzeug mit einer Verbrennungskraftmaschine 1 mit Abgasauslasskanälen 2 mit möglichst motornah angeordnetem Katalysator 3. Dem mit den Auslasskanälen 2 beginnenden Abgasstrang 5 ist im weiteren Verlauf stromabwärts nach dem Katalysator 3 ein Turbolader 6 nachgeschaltet. Zur Ausnutzung möglichst hoher Abgastemperaturen ist der Turbolader 6 ebenfalls möglichst motornah angeordnet und bewirkt so eine möglichst effektive Vorverdichtung von Frischluft 7. Die durch den Turbolader 6 vorkomprimierte Frischluft 7 wird über einen Ladeluftkühler 8 zur Regelung einer der Verbrennungskraftmaschinen 1 zuzuführenden Luftmenge bzw. Luftmasse durch eine Drosselklappe 10 gesteuert. Eine Luftmasse m_{L} wird direkt am Eingang der Verbrennungskraftmaschine 1 von einem Luftmassensensor 11 detektiert. Ein Ausgangssignal des Luftmassensensors 11 wird einer elektronischen Steuerung 12 der Verbrennungskraftmaschine 1 zugeführt. Die elektronischen Steuerung 12 steuert mit einem Tank 14 in Verbindung stehende Mittel 15 zur Gemischaufbereitung in Zusammenarbeit mit der Ansteuerung der Drosselklappe 10. In nicht weiter zeichnerisch dargestellter Art und Weise wird in der elektronischen Steuerung 12 auch ein jeweilig von einem Fahrer vorgegebenes Signal verarbeitet.

Der Steuerung 12 beigeordnet ist in der vorliegenden Ausführungsform der Erfindung eine Logik 17, durch die die Mittel 15 zur Gemischaufbereitung zur Abgabe einer Testeinspritzung zu einem definierten Zeitpunkt und definierter Kraftstoffmenge angesteuert werden. Diese Testeinspritzung wird als Nach- oder Sekundäreinspritzung zu einem Winkel bzw. Zeitpunkt ausgeführt, so dass der eingespritzte Brennstoff den Zylinder durch die Abgasauslasskanäle 2 im Wesentlichen unverbrannt verlässt.

Das sich ergebende Gemisch wird dann erst im Katalysator 3 umgesetzt, so dass sich im weiteren Verlauf des Abgasstranges 5 die Enthalpie vor dem Turbolader 6 deutlich erhöht. Im Zuge dieser erhöhten Enthalpie wird durch den Turbolader 6 ein wesentlich erhöhtes Maß an Luftmasse m_{L} durch den Ladeluftkühler 8 auf die Drosselklappe 10 geführt und nachfolgend durch den Sensor 11 detektiert. Ein entsprechendes Ausgangssignal des Sensors 11 wird dann der Logik 17 zugeleitet, die aus den bekannten Werten vor der Einleitung der Testeinspritzung und während der sehr kurz andauernden Testeinspritzung auf den Wirkungsgrad und damit die Funktionsfähigkeit des Katalysators 3 rückschließen kann.

Im vorliegenden Ausführungsbeispiel sind die Rechenmittel 17 als Auslöser einer Testeinspritzung ausgebildet. Hierzu sind die Rechenmittel 17 mit dem Mittel 15 zur Durchführung einer Testeinspritzung verbunden und definieren damit den Start gemäß Flussdiagramm nach Figur 2, wie nachfolgend beschrieben.

In einem bevorzugten Ausführungsbeispiel der Erfindung sieht der Ablauf eines erfindungsgemäßen Verfahrens gemäß der Abbildung von Figur 1 ein Abschalten der Abgasrückführung vor. Hierdurch vereinfacht sich das nachfolgende Verfahren, da keine Berücksichtigung einer AGR-Rate bei der Bestimmung eines Katalysator-Wirkungsgrades mehr erfolgen muss. Gemäß Flussdiagramm von Figur 2 läuft nun in der Vorrichtung gemäß Figur 1 unter Auslösung durch die Logik 17 ein Verfahren mit folgenden Teilschritten ab: Nach einem nicht weiter dargestellten Erkennen der Notwendigkeit einer Diagnose des Katalysators 3, hier z.B. durch Zeitablauf zeit- und verbrauchsdefinierter Intervalle, werden geeignete Betriebsbedingungen der Brennkraftmaschine 1 abgewartet. Sobald geeignete Betriebsbedingungen erreicht sind, werden folgende Schritte eingeleitet:
- Einstellung und/oder Detektion einer erforderlichen Stellung der Drosselklappe 10;
- Ermittlung des Saugrohr-/Ladedruckes, des angesaugten Luftmassenstromes m_{L};
- Aktivierung der Nacheinspritzung in dem Mittel 15, gekennzeichnet durch definierte Einspritzmenge und Zeitpunkt;
- Ermittlung des Saugrohr-/Ladedruckes oder des angesaugten Luftmassenstromes m_{L} (normal);
- Ermittlung des Anstiegs des Saugrohr-/Ladedruckes oder des angesaugten Luftmassenstromes m_{L} (Testeinspritzung);
- Ermittlung der diesem Anstieg entsprechenden Abgasenthalpie in Strömungsrichtung hinter dem Katalysator 3;
- Ermittlung des Katalysatorwirkungsgrades aus der zugeführten Nacheinspritzmenge und der am Katalysator 3 konvertierten Einspritzmenge;
- Mit der Kenntnis des Wirkungsgrades und eventuell des in diesem Beispiel durch Temperatur und Abgasmassenstrom gekennzeichneten Betriebspunktes erfolgt eine Beurteilung des Katalysators 3 bzgl. ausreichender Konvertierungsfähigkeit.

Dieses Verfahren arbeitet sehr schnell, wobei auf zusätzliche Sensoren prinzipiell verzichtet werden kann. Die Diagnose ist zudem sehr exakt, da die Ermittlung eines Katalysator-Wirkungsgrades auf Basis einer Druck- oder Durchflussmessung mit sehr genauer Messmethodik erfolgt.

## Patentansprüche

1. Verfahren zur Diagnose der Wirksamkeit eines Abgaskatalysators im Abgasstrang einer Brennkraftmaschine, das unter Verwendung einer sehr späten Nacheinspritzung bzw. Sekundäreinspritzung als Testeinspritzung von Kraftstoff durchgeführt wird,
**dadurch gekennzeichnet, dass** eine im Zuge der Testeinspritzung hervorgerufene erhöhte Verdichterleistung eines stromab des Katalysators (3) verwendeten Abgasturboladers (6) einen höheren Ladedruck bzw. eine deutliche Zunahme des Luftmassenstroms (m_{L}) bewirkt, so dass aus einer Änderung der Ansaug-Luftmenge der Verbrennungskraftmaschine (1) die Wirksamkeit des Katalysators (3) bestimmt wird.

2. Verfahren nach Anspruch 1,
**dadurch gekennzeichnet dass** eine Änderung der Ansaug-Luftmenge der Verbrennungskraftmaschine (1) über einen Luftmassensensor (11) gemessen wird.

3. Vorrichtung zur Diagnose der Wirksamkeit eines in einem Abgasstrang (4) einer Brennkraftmaschine (1) angeordneten Abgaskatalysators(3), wobei die Brennkraftmaschine (1) eine Steuereinrichtung (12) und Mittel (15) zur Durchführung einer sehr späten Nacheinspritzung bzw. Sekundäreinspritzung aufweist,
**dadurch gekennzeichnet, dass** Rechenmittel (17) vorgesehen sind, die mit einem Luftmassensensor (11) verbunden sind, um aus einer Änderung der Ansaug-Luftmenge (m_{L}) der Verbrennungskraftmaschine (1) als Ausgangssignal des Luftmassensensors (11) eine Wirksamkeit des Katalysators (3) zu bestimmen.

4. Vorrichtung nach dem vorhergehenden Anspruch,
**dadurch gekennzeichnet, dass** die Rechenmittel (17) als Auslöser einer Testeinspritzung mit dem Mittel (15) zur Durchführung einer Testeinspritzung verbunden sind.

## Claims

1. Method of diagnosing the effectiveness of a catalytic exhaust converter in the exhaust gas line of an internal combustion engine, which method is carried out using a very late after-injection and/or secondary injection as a test injection of fuel,
**characterised in that** in the course of the test injection an increased compressor delivery rate of an exhaust-gas turbocharger (6) used downstream of the catalytic converter (3) is caused and leads to a higher charge-air pressure and/or a marked increase of the air-mass flow (m_{L}), so that from a variation of the intake air quantity of the internal combustion engine (1) the effectiveness of the catalytic converter (3) is determined.

2. Method according to claim 1,
**characterised in that** a variation of the intake air quantity of the internal combustion engine (1) is measured by means of an air-mass sensor (11).

3. Device for diagnosing the effectiveness of a catalytic exhaust converter (3) disposed in an exhaust gas line (4) of an internal combustion engine (1), wherein the internal combustion engine (1) comprises a control device (12) and means (15) of carrying out a very late after-injection and/or secondary injection,
**characterised in that** computing means (17) are provided, which are connected to an air-mass sensor (11) in order to determine from a variation of the intake air quantity (m_{L}) of the internal combustion engine (1) as an output signal of the air-mass sensor (11) an effectiveness of the catalytic converter (3).

4. Device according to the preceding claim,
**characterised in that** the computing means (17) are connected as a trigger of a test injection to the means (15) of carrying out a test injection.

## Revendications

1. Procédé de diagnostic de l'efficacité d'un pot catalytique dans la ligne d'échappement d'un moteur à combustion interne, qui est réalisé en utilisant une post-injection ou une injection secondaire très tardive comme injection d'essai de carburant,
**caractérisé en ce que**
une plus grande puissance de compression, générée au cours de l'injection d'essai, d'un turbocompresseur à gaz d'échappement (6) utilisé en aval du pot catalytique (3) provoque une pression d'admission plus élevée ou une nette augmentation du courant de masses d'air (m_{L}) de manière à déterminer l'efficacité du pot catalytique (3) à partir d'une modification de la quantité d'air d'admission du moteur à combustion interne (1).

2. Procédé selon la revendication 1,
**caractérisé en ce que**
une modification de la quantité d'air d'admission du moteur à combustion interne (1) est mesurée par un capteur de masses d'air (11).

3. Dispositif de diagnostic de l'efficacité d'un pot catalytique (3) aménagé dans une ligne d'échappement (4) d'un moteur à combustion interne (1), dans lequel le moteur à combustion interne (1) présente un dispositif de commande (12) et des moyens (15) permettant de réaliser une post-injection ou une injection secondaire très tardive,
**caractérisé en ce que**
l'on prévoit des moyens de calcul (17), qui sont raccordés à un capteur de masses d'air (11) pour déterminer à partir d'une modification de la quantité d'air d'admission (m_{L}) du moteur à combustion interne (1) sous la forme d'un signal de sortie du capteur de masses d'air (11) une efficacité du pot catalytique (3).

4. Dispositif selon la revendication précédente,
**caractérisé en ce que**
les moyens de calcul (17) sont raccordés, comme déclencheurs d'une injection d'essai, aux moyens (15) permettant de réaliser une injection d'essai.
